# EUROPEAN PATENT SPECIFICATION

(11) **EP 0 262 676 B1**
(45) Date of publication and mention of the grant of the patent: **13.03.1996**
(21) Application number: 87114352.5
(22) Date of filing: 01.10.1987
(51) Int. Cl.: H01J 1/30

(54) **Electron emission device**
Elektronenemissionsvorrichtung
Dispositif d'émission d'électrons

(30) Priority: 03.10.1986 JP 234500/86
(43) Date of publication of application: 06.04.1988
(73) Proprietor: CANON KABUSHIKI KAISHA, Tokyo (JP)
(72) Inventor: Sugata, Masao, Yokohama-shi Kanagawa-ken (JP); Tsukamoto, Takeo, Atsugi-shi Kanagawa-ken (JP); Shimizu, Akira, Inagi-shi Tokyo (JP); Suzuki, Akira, Yokohama-shi Kanagawa-ken (JP); Shimoda, Isamu, Kanagawa-shi (JP); Okunuki, Masahiko, Nishi Tama-gun Tokyo (JP)
(74) Representative: Bühling, Gerhard, Dipl.-Chem.

(56) References cited:
- DE-A- 3 432 877
- US-A- 3 921 031
- JOURNAL OF APPLIED PHYSICS, vol. 45, no. 1, January 1974, pages 119-125 New York, US, D.G. ONN et al.: "Cryogenic thinfilm electron emitters"
- SOLID-STATE AND ELECTRON DEVICES, vol. 2, no. 6, November 1978, pages 169-175, G.G. ROBERTS et al.: "InP/Langmuirfilm MISFET"
- SCI. PROG. OXF., vol. 69, 1985, pages 533-550; J.R. PETERSON et al.:"Langmuir-Blodgett films"
- PHYSICAL REVIEW LETTERS, vol. 53, no. 1, July 2, 1984, pages 94-97; Am. Phys. Soc., New York, US. P. Pfluger et al.: "Hot-electron transport in polymeric dielectrics"
- EUROPHYSICS LETTERS; vol. 5, no. 4, February 15, 1988, pages 375-380; M. Rei Vilar et al.: "Monoenergetic and directed electron emission from a large-bandgap organic insulator with negative electron affinity"
- THIN SOLID FILMS, vol. 68, 1980, pages 257-273; Elsevier Sequoia S.A., Lausanne, CH; H.M. MILLANY et al.: "Dielectric properties of stearic acid multilayers"
- IBM TECHNICAL DISCLOSURE BULLETIN, vol. 25, no. 11A, April 1983, pages 5538-5540; New York, US; K.R. GREBE et al.: "Para-xylylene patterning"

## Description

The present invention relates to a multi-emitter device for emitting electrons (an electron emission device), and more particularly to an electron emission device which induces electron emission upon application of a voltage. Such an electron emission device is suitably used as an electron source of an electron beam apparatus.

As an electron source of an electron beam apparatus such as a cathode ray tube, thermal electron emission from a thermal cathode has been used. Such an electron emission device which uses the thermal cathode has a large energy loss due to heating, needs heating means and takes a long time for pre-heating and hence cannot be active simultaneously with the switch-on.

A study of electron emission device which do not need heating has been made and several devices have been proposed.

For example, a reverse bias is applied to PN junction to cause electron avalanche break-down to emit electrons out of the device, a voltage is applied across two metals of a metal-insulation layer-metal layer structure to emit electrons passed through the insulation layer by a tunneling effect out of the device through the metal layer (MIM type), a voltage is applied to a high resistance thin film orthogonally to a direction of film thickness to emit electrons from the surface of the thin film externally of the device (surface conduction (SCE) type), or a voltage is applied to a metal having a shape which is easy to create electric field concentration to generate a locally high density electric field so that electrons are emitted from the metal externally of the device (field effect (FE) type).

Of those, the MIM type electron emission device needs a relatively low application voltage and does not need a very high vacuum.

In the proposed MIM type device, a lower (non-electron emission) metal is Al or Be, an insulation layer is a surface oxidation layer of that metal (for example, Al₂O₃ (as in DE-A-3 432 877) or BeO layer formed by thermal oxidation, air oxidation or anode oxidation), and an upper metal is Au, Pt or Al.

Since the insulation layer of the prior art MIM type device is an inorganic thin film, a pinhole is easily formed during the manufacture. Accordingly, it is difficult to manufacture the device having a good performance or the characteristic of the device varies from device to device.

Sci. Prog. Oxf., vol.69(1985) pp.533-550; J.R. Peterson et al. "Langmuir-Blodgett-films" suggests the possible use of Langmuir-Blodgett-films as insulating and tunneling layers.

It is an object of the present invention to provide an electron emission device which resolves the above problems and has no structural defect such as pinhole in an insulation layer.

The object is solved by a multi-emitter device for emitting electrons according to the characterising part of claim 1.
Figs. 1 and 2 show partial sectional views of electron emission devices for illustrating the structure,
Fig. 3(a) shows a partial plan view of the electron emission device in accordance with present invention, and
Figs. 3(b) and 3(c) show B-B and C-C sectional views of Fig. 3(a).

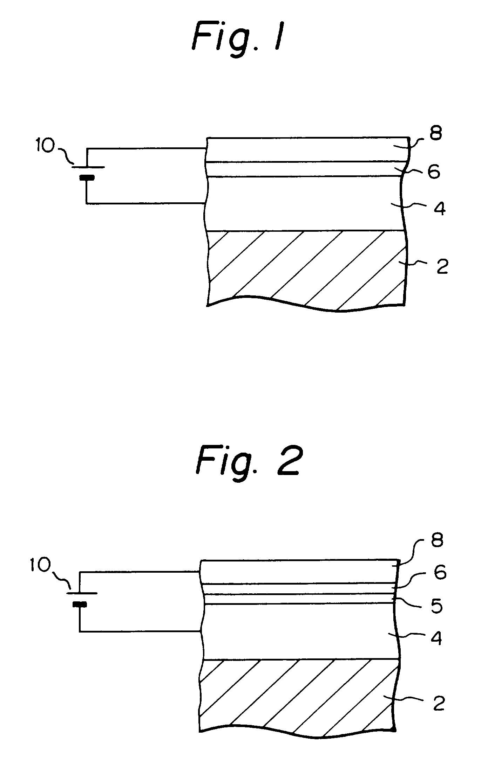

Fig. 1 shows a partial sectional view of an electron emission device.

In Fig. 1, numeral 2 denotes a substrate which is made of insulative material including ceramics such as glass, alumina, saphire, mica and magnecia, and crystals such as GaAs, GaSb, InAs, GaP and spinel (MgAl₂O₄) Numeral 4 denotes a first metal layer, numeral 6 denotes an insulation layer and numeral 8 denotes a second metal layer. Those layers form an MIM structure.

The first metal layer 4 may be made of Al, Be, Mo, Pt, Ta, Au, Pd, Ag, W, Cr, Mg or Ni-Cr. The metal layer 4 may be an alloy or silicide of some of those metals. The thickness of the metal layer 4 is not restrictive and it may be 0.01 - 5 µm.

The insulation layer 6 may be made of organic insulation material such as stearic acid, arachidic acid, palmitic acid, n-paraffin, hexatriacontan and polyparaxylylene. The insulation layer 6 is preferably as thin as possible so long as insulation breakdown does not occur. The thickness is properly selected in accordance with the type of insulator used for the layer 6 and the type of metal used for the second metal layer 8. For example, it is 10 - 2000 Å.

The second metal layer 8 may be made of Au, Pt, Al and Ag. The metal layer 8 may be alloy or silicide of some of those metals. The thickness of the metal layer 8 is as thin as possible to get a higher electron emission efficiency. For example, it is 10 - 500 Å.

As shown in Fig. 1, means 10 for applying a voltage with the second metal layer 8 being positive is connected to the first metal layer 4 and the second metal layer 8. The means 10 include a power supply and a switch not shown.

The electron emission device may be manufactured in the following manner.

The surface of the material for the substrate 2 is polished by mechanical polishing or chemical polishing to have high degree of flatness and surface roughness, and the first metal layer 4 is formed on the substrate 2 by vapor deposition, sputtering, CVD, plasma CVD, ion implating or cluster ion beam method.

The insulation layer 6 is then formed on the first metal layer 4. It may be formed by single molecule accumulation method (so-called Langmuir-Blodgett method), vapor deposition, or CVD.

In the single molecule accumulation method, a single molecule layer of a surface active organic material is formed on liquid surface, and the substrate surface is moved across the liquid surface to shift the single molecule layer of the surface active organic material onto the substrate surface. The movement of the substrate is repeated as required so that the single crystal layer is accumulated to form the organic material film of a desired thickness.

The molecules of the single molecule film or accumulated film should have a hydrophobic portion and a hydrophibic portion in the same chemical constitution. Most typical hydrophobic portion is a long chain alkyl group which usually has 5 - 30 carbons and preferably 10 - 25 carbons. If the length of the alkyl chain is appropriate, straight chain alkyl group or branched alkyl group may be used. Other hydrophobic groups are olefin hydrocarbon group such as vinylene, vinylidene and acetylene, condensated polycyclic phenyl group such as phenyl, naphthyl and anthranil and chained polycyclic phenyl group such as biphenyl and terphenyl. They may be used single or in combination, and may be located at an end or an intermediate position of the alkyl group. Most typical hydrophilic portions are carboxyl group, its metal salt and amine salt, sulfon amide group, amide group, amino group, imino group, hydroxyl group, class 4 amino group, oxyamino group, oxyimino group, diazonium group, quanidine group, hydrazine group, phosphoric acid group, silicic acid group and aluminic acid group.

The organic insulation layer 6 formed by the single molecule accumulation method may be a fatty acid such as stearic acid, arachidic acid, palmitic acid, azulene squarilium dye and deviation of diacetylene.

By the single molecule accumulation method, the organic insulation layer 6 having a uniformily thin thickness and substantially no defect such as pinhole is provided.

The organic insulation layer 6 formed by the vapor deposition may be n-paraffin, hexatriacontan and stearic acid.

The organic insulation layer 6 formed by the CVD method by a plasma polymerized film formed from polyparaxylylene and hydro-carbon.

The second metal layer 8 is formed on the organic insulation layer 6. It is formed in the same manner as the first metal layer 4.

Then, the voltage application means 10 is connected to the first metal layer 4 and the second metal layer 8.

The device of the present embodiment is driven by closing the switch of the voltage application means 10. The voltage of the means 10 is appropriately selected in accordance with the structure of the MIM device and the desired electron emission characteristic. For example, it is 3 - 20 volts. By applying such a voltage across the first metal layer 4 and the second metal layer 8, electrons are emitted from the surface of the second metal layer 8.

Fig. 2 shows a partial sectional view of an another electron emission device. In Fig. 2, the like elements to those shown in Fig. 1 are designated by the like numerals.

The present embodiment is different from the first device only in that a lamination of an organic insulation layer 6 and an inorganic insulation layer 5 is used as the insulation layer.

The inorganic insulation layer 5 may be made of an oxide of the metal used for the first metal layer 4. It may be formed by converting the surface of the first metal layer 4 to an insulation layer consisting of a metal oxide by means of thermal oxidation, air oxidation or anode oxidation. When the single molecule accumulation method is used to form the organic insulation layer 6, the surface of the first metal layer 4 may sometimes be automatically oxidized by dipping into liquid, and it may be used as the inorganic insulation layer 5.

In the present embodiment, since the insulation layer is the lamination of the inorganic insulation layer and the organic insulation layer, a sufficient strength is provided by the inorganic insulation layer, and the defect such as pinhole in the inorganic insulation layer is covered by the organic insulation layer and the performance is improved.

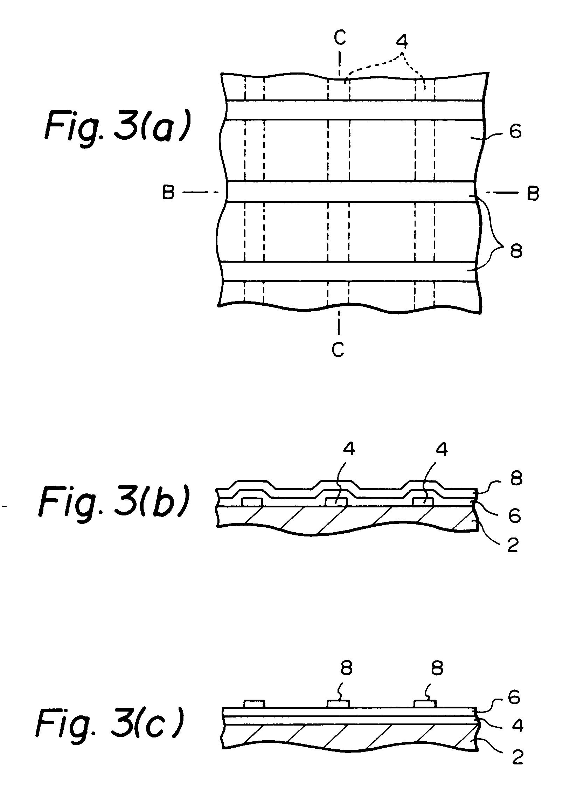

Figs. 3(a) to 3(c) show an embodiment of the electron emission device having a number of electron emission devices explained above arranged. Fig. 3(a) shows a partial plan view, and Figs. 3(b) and 3(c) show B-B and C-C sectional views.

In the present embodiment, numeral 2 denote a substrate on which a plurality of first metal layers 4 of predetermined width are arranged in parallel along a direction C-C. Numeral 6 denotes an organic insulation layer which is applied over the entire surface to cover the substrate 2 and the first metal layer 4. Numeral 8 denotes second metal layers having a predetermined width and extending along a direction B-B. They are arranged parallelly at a constant pitch on the organic insulation layer 6.

The substrate 2, first metal layers 4, organic insulation layer 6 and second metal layers 8 are made of the materials explained in the first embodiment.

The device of the present embodiment is manufactured in the same manner as that explained in the first embodiment. In the present embodiment, however, the first metal layers 4 and second metal layers 8 must be patterned. The patterning may be done by conventional photolithography technique.

While not shown in Fig. 3, means for applying a voltage with the second metal layers being positive is connected to the first metal layers 4 and the second metal layers 8. In the present embodiment, the MIM structure of the first embodiment is constructed at each of the crosspoints of the first metal layers 4 and the second metal layers 8. A desired MIM structure may be driven by a matrix drive.

In accordance with the present embodiment, since the insulation layer of the MIM structure includes the organic insulation layer, the structural defect such as pinhole is substantially prevented and the electron emission device having a uniform characteristic is provided.

## Claims

1. A multi-emitter device for emitting electrons comprising a substrate (2), a plurality of stripes of a first metal (4) arranged in parallel within a constant interval on said substrate, an insulator layer (6) on said first metal stripes, a plurality of stripes of a second metal (8) arranged in parallel with a constant interval on said insulator layer so as to form a matrix structure, and voltage applying means (10) for applying a voltage between said first and second metal stripes,
characterized in that said insulator is an organic insulator comprising a multi-layer structure of mono-molecular layers.

2. A multi-emitter device according to claim 1, wherein in addition an inorganic insulator layer (5) is provided between said organic insulator and at least one of said first and second metals.

3. A multi-emitter device according to claim 1, wherein said voltage applying means comprises a power source and a switch.

4. A multi-emitter device according to claim 1, wherein said organic insulator is a Langmuir-Blodgett film.

## Patentansprüche

1. Elektronenmehrfachemissionsvorrichtung umfassend: ein Substrat (2), eine Mehrzahl von Streifen eines ersten Metalls (4), die parallel zueinander mit einem konstanten Intervall auf dem Substrat angeordnet sind, eine Isolationsschicht (6) auf dem ersten Metallstreifen, eine Mehrzahl von Streifen eines zweiten Metalls (8), die parallel zueinander mit einem konstanten Intervall auf der Isolationsschicht unter Bildung einer Matrixstruktur angeordnet sind, sowie eine Spannungsanlegeeinrichtung (10) zum Anlegen einer Spannung zwischen den ersten und den zweiten Metallstreifen, **dadurch gekennzeichnet**, daß es sich bei dem Isolator um einen organischen Isolator handelt, der eine mehrschichtige Struktur aus monomolekularen Schichten umfaßt.

2. Mehrfachemissionsvorrichtung nach Anspruch 1, wobei zusätzlich eine anorganische Isolationsschicht (5) zwischen dem organischen Isolator und wenigstens einem von dem ersten und dem zweiten Metall bereitgestellt ist.

3. Mehrfachemissionsvorrichtung nach Anspruch 1, wobei die Spannungsanlegeeinrichtung eine Stromquelle und einen Schalter umfaßt.

4. Mehrfachemissionsvorrichtung nach Anspruch 1, wobei der organische Isolator ein Langmuir-Blodgett-Film ist.

## Revendications

1. Dispositif multi-émetteur pour émettre des électrons, comprenant un substrat (2), une pluralité de bandes d'un premier métal (4) disposées en parallèle avec un intervalle constant sur ledit substrat, une couche d'isolant (6) sur lesdites bandes de premier métal, une pluralité de bandes d'un deuxième métal (8) disposées en parallèle avec un intervalle constant sur ladite couche d'isolant de façon à former une structure de matrice, et des moyens d'application de tension (10) pour appliquer une tension entre lesdites bandes de premier métal et de deuxième métal,
caractérisé en ce que ledit isolant est un isolant organique comprenant une structure multicouche de couches monomoléculaires.

2. Dispositif multi-émetteur selon la revendication 1, dans lequel en outre une couche d'isolant organique (5) est présente entre ledit isolant organique et au moins l'un desdits premier et deuxième métaux.

3. Dispositif multi-émetteur selon la revendication 1, dans lequel lesdits moyens d'application de tension comprennent une source d'alimentation et un commutateur.

4. Dispositif multi-émetteur selon la revendication 1, dans lequel ledit isolant organique est un film de Langmuir-Blodgett.
